# EUROPÄISCHE PATENTSCHRIFT

(11) **EP 1 290 434 B1**
(45) Veröffentlichungstag und Bekanntmachung des Hinweises auf die Patenterteilung: **13.08.2008**
(21) Anmeldenummer: 01951366.2
(22) Anmeldetag: 11.06.2001
(51) Int. Cl.: G01N 27/41, G01N 27/406

(54) **VORRICHTUNG ZUM BETRIEB EINER LINEAREN LAMBDASONDE**
DEVICE FOR OPERATING A LINEAR LAMBDA PROBE
DISPOSITIF POUR FAIRE FONCTIONNER UNE SONDE LAMBDA LINEAIRE

(30) Priorität: 16.06.2000 DE 10029794
(43) Veröffentlichungstag der Anmeldung: 12.03.2003
(73) Patentinhaber: Continental Automotive GmbH, 30165 Hannover (DE)
(72) Erfinder: BOLZ, Stephan, 93102 Pfatter (DE)
(86) Internationale Anmeldenummer: PCT/DE2001/002165
(87) Internationale Veröffentlichungsnummer: WO 2001/096851

(56) Entgegenhaltungen:
- EP-A- 1 001 261
- DE-A- 19 836 128
- US-A- 5 173 167
- "Integrated circuit for continuous lambda regulation" BOSCH MICROELECTRONICS DATENBLATT, Nr. CJ110, September 1998 (1998-09), Seiten 1-6,

## Beschreibung

Die Erfindung betrifft eine Vorrichtung zum Betrieb einer linearen Lambdasonde einer Brennkraftmaschine nach dem Oberbegriff von Anspruch 1.

Aus DE 198 36 128 A1 ist eine Schaltungsanordnung zum Regeln eines Pumpstroms einer Abgassonde, insbesondere eines NOₓ-Sensors, in einem Kraftfahrzeug bekannt, die auch für den Betrieb linearer Lambdasonden geeignet ist.

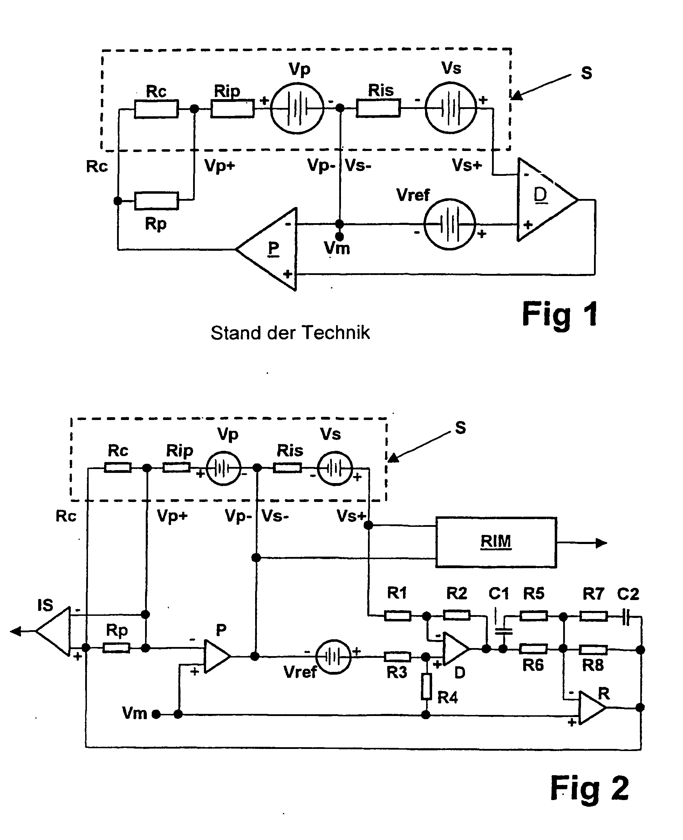

Eine Vorrichtung zum Betreiben einer linearen Lambdasonde einer Brennkraftmaschine, deren Prinzipschaltbild in stark vereinfachter Form in Figur 1 dargestellt ist, ist beispielsweise aus Bosch Microelectronics, Datenblatt CJ110 "Integrated circuit for continuous lambda regulation", September 1998, bekannt.

Weiter ist aus EP 1 001 261 A1 eine Kontrollvorrichtung für eine lineare Lambdasonde bekannt, die in der Lage ist, zwei verschiedene Arten von Sensoren zu Betreiben.

Der Gesetzgeber fördert durch steuerliche Maßnahmen die Entwicklung von Kraftfahrzeugen mit zunehmend niedrigeren Schadstoffemissionen und geringerem Kraftstoffverbrauch. Dies hat bei Ottomotoren mit stöchiometrischer Gemischbildung (λ=1) zur Entwicklung von SULEV-(Super Ultra Low Emission Vehicles)-Fahrzeugen mit extrem niedrigen Emissionen geführt.

Zur Kraftstoffeinsparung sind derzeit Motoren mit direkter HPDI-(High Pressure Direct Injection)-Kraftstoffeinspritzung in Entwicklung bzw. Markteinführung. Der Kraftstoff wird hier unter erhöhtem Druck (ca. 150bar) direkt in den Brennraum eingespritzt. Die damit mögliche Gemischaufbereitung kann zwischen fett, stöchiometrisch und mager variieren. Für den Teillastbetrieb des Motors bietet eine magere Gemischbildung nennenswerte Verbrauchsvorteile.

Beide Entwicklungen erfordern eine wesentlich genauere Gemischregelung, als sie mit den heute üblichen Lambdasonden (binäre Sprungsonden) möglich ist. Diese haben einen extrem eingeschränkten Meßbereich um λ=1 und sind deshalb für Messungen im Magerbetrieb λ>1 ungeeignet.

Aus diesem Grund kommen nun verstärkt Lambdasonden mit erweitertem, linearem Meßbereich zum Einsatz, sogenannte lineare Lambdasonden.

Binäre Sprungsonden besitzen ein Elektrodenpaar, das durch eine - bei hohen Temperaturen als Elektrolyt wirkende - Zirkonkeramik getrennt ist. Eine Elektrode befindet sich dabei im Abgasstrom, die andere in Luft. Bei unterschiedlicher Sauerstoffkonzentration zwischen Luft und Abgas entsteht zwischen den Elektroden eine Spannung, deren Wert durch die Nernst'sche Diffusionsgleichung bestimmt ist. Typische Werte dieser Spannung sind bei Luft ca. 200mV, bei λ=1 ca. 450mV und bei fettem Gemisch ca. 800mV. In der Umgebung um λ=1 ändert sich die Sauerstoffkonzentration um etliche Zehnerpotenzen, was sich in einem sprunghaften Wechsel der Sondenspannung in diesem Bereich äussert.

Die lineare Lambdasonde ist komplexer aufgebaut. Sie besitzt zwei Elektrodenpaare sowie eine Meßkammer, die über eine Diffusonsbarriere mit dem Abgasstrom verbunden ist. Das erste Elektrodenpaar ist zwischen Meßkammer und Luft angeordnet und wird - ähnlich wie bei der Sprungsonde - zur Messung der Sauerstoffkonzentration in der Meßkammer verwendet. Das zweite Elektrodenpaar ist zwischen der Meßkammer und dem Abgasstrom angeordnet. Es erlaubt - bei Anlegen eines Stromes entsprechender Polarität - Sauerstoffionen aus der Meßkammer heraus oder in sie hinein zu pumpen. Bezeichnung: Pumpelektroden.

Somit ist es möglich, ein dynamisches Gleichgewicht zwischen Sauerstoff-Fluss durch die Diffusionsbarriere und Sauerstoffionenfluss durch das Pumpelektrodenpaar zu erzeugen. Als Regelkriterium eignet sich dabei die mit den Meßelektroden bestimmbare Sauerstoffkonzentration in der Meßzelle. Ein Vorzugswert ist z.B. 450mV für λ=1. Der in diesem Falle fließende Pumpstrom Ip ist also ein Maß für die Sauerstoffkonzentration im Abgas (und nach numerischer Umwandlung auch für λ).

Die Relation der Sauerstoffkonzentration im Abgas zum Pumpstrom wird von einigen Sondenparametern beeinflusst. Fertigungsbedingt streut der dynamische Widerstand der Diffusionsbarriere etwas. Dies hätte eine Abweichung des Übersetzungsverhältnisses zur Folge (Verstärkungsfehler). In der Fertigung wird dies durch Messung und Einfügen eines Kalibrierwiderstandes Rc in den Sondenstecker kompensiert.

Der Kalibrierwiderstand erlaubt eine Skalierung des Pumpstroms in der nachfolgenden Auswerteschaltung, wodurch der Übersetzungsfehler wieder ausgeglichen wird.

Des weiteren besitzt der dynamische Widerstand der Diffusionsbarriere eine Temperaturabhängigkeit, was wiederum zu Fehlern im Übersetzungsverhältnis führt. Man begegnet dem durch Messung der Sondentemperatur und Regelung mittels eines in der Sonde eingebauten Heizelementes. Aus Kostengründen wird dabei auf ein separates Thermoelement verzichtet. Man mißt statt dessen den stark temperaturabhängigen Innenwiderstand der Sonde.

Bisher war die Anwendung der linearen Lambdasonde auf den nichtaufgeladenen, stöchiometrischen Betrieb (Pa=1bar, λ=1) des Motors beschränkt. Entsprechend waren auch nur geringe Pumpströme zur Aufrechterhaltung des Gleichgewichtes (λ=1) in der Meßzelle erforderlich (|Ip| <~2.5mA).

Für Magermotoren ist ein Betrieb bis λ=4 vorgesehen, was einen drastisch erhöhten Pumpstrom erfordert. Bei Betrieb in einem aufgeladenen Motor (Turbo) ergibt sich ein Abgasdruck von bis zu 2bar. Die Druckempfindlichkeit der Sonde führt zu einer weiteren Erhöhung des maximal notwendigen Pumpstromes auf bis zu ±12mA. Dies ist mit heute am Markt befindlichen Auswerteschaltungen nur teilweise möglich.

Eine bekannte Auswerteschaltung ist in Figur 1 dargestellt und wird weiter unten beschrieben.

### Diese Schaltung hat gewisse Nachteile:

Bei Versorgung der Auswerteschaltung mit einer in der Regel bereits vorhandenen Versorgungsspannung Vcc = 5V ergibt sich eine Mittenspannung Vm von ca. 2.5V. Die an der Sonde anliegende Spannungskette ergibt sich zu:
Vm < |Rc*Ip + Vp|+Vsat;
Rc = 30 bis 100Ω = gesamter Kalibrierwiderstand (Herstellerabhängig),
Vp=-350 bis +450mV; Polarisationsspannung der Pumpzelle,
Vsat=100 bis 200mV; Sättigungsspannung der Pumpstromquelle P.

Dies begrenzt den maximal möglichen Pumpstrom Ip auf <10mA, entspricht also nicht den Anforderungen (Ip = ±12mA).

Alternativ könnte auf eine höhere Versorgungsspannung der Schaltung ausgewichen werden, z.B. 8V. Dies hätte allerdings den Nachteil, daß ein zusätzlicher, teurer Spannungsregler erforderlich wäre und die Schaltung bei niedriger Batteriespannung (<8.5V) nicht mehr funktioniert. (die minimal zulässige Batteriespannung ist auf Vbatₘᵢₙ = 6V festgelegt!).

Der Pumpstrom Ip ist mit einem Gleichtaktsignal (Vm ±2V) überlagert. Bedingt durch die endliche Gleichtaktunterdrückung realer intergrierter Verstärker (z. B. 65dB) wird die Messung um bis zu ±0.3% verfälscht.

Zusätzlich entsteht durch die Polarisationsspannung der Pumpzelle (-350mV bei λ<1) ein Nullpunktfehler ΔIp von ca 5µA. Da der Pumpstrom Ip das primäre Messsignal der Sauerstoffsonde ist, gehen diese Fehler direkt in die Gesamtgenauigkeit des Sondenmesssignals ein. Dies begrenzt die Genauigkeit der Lambdaregelung und stellt somit ein signifikantes Problem dar.

Es ist Aufgabe der Erfindung, die bekannte Vorrichtung zum Betrieb einer linearen Lambdasonde dahingehend zu verbessern, daß den gestellten Anforderungen entsprechende Werte des Pumpstroms Ip zur Verfügung stehen, daß der beschriebene Gleichtaktfehler vermieden und die Genauigkeit der Messung wesentlich verbessert wird, und daß auch bei niedriger Batteriespannung (Vb = +6V) die Sonde noch funktionsfähig ist.

Diese Aufgabe wird erfindungsgemäß durch die Merkmale des Anspruchs 1 gelöst. Das wesentlichste Merkmal nach der Erfindung ist die Verlagerung der Mittenspannung vom Anschluß Vp-/Vs- der Sonde zu deren Anschluß Vp+, siehe Figur 2.

Nachstehend wird ein Ausführungsbeispiel der Erfindung anhand einer schematischen Zeichnung näher beschrieben. In der Zeichnung zeigen:
Figur 1 ein Prinzipschaltbild einer bekannten Vorrichtung, und
Figur 2 ein Prinzipschaltbild einer erfindungsgemäßen Vorrichtung.

Figur 1 zeigt ein Prinzipschaltbild der bekannten Vorrichtung zum Betrieb einer linearen Lambdasonde einer Brennkraftmaschine im Bereich λ=1.

Die Lambdasonde S besteht
a) aus der sog. Referenzzelle, d.h., aus den Elektroden zwischen Meßkammer und Luft, in der Zeichnung dargestellt durch die zwischen den Elektroden meßbare Nernstspannung Vs und den Innenwiderstand Ris der Diffusionsbarriere zwischen ihnen,
b) aus der sog. Pumpzelle, d.h., aus den Elektroden zwischen Meßkammer und Abgas, dargestellt durch die zwischen ihnen abfallende Spannung Vp und den (Referenz-) Widerstand Rip zwischen diesen Elektroden, und
c) aus dem Kalibrierwiderstand Rc im Sondenstecker.

Die Elektroden sind auf den Keramikkörper der Sonde aufgebracht. Das Keramikmaterial zwischen den Elektrodenpaaren ist bei hohen Temperaturen leitfähig und dient als Festkörperelektrolyt.

Da der Widerstand Rc aufgrund seiner Einbaulage im Sondenstecker erheblichen Umweltbelastungen ausgesetzt ist, wird ihm im Steuergerät ein weiterer Widerstand Rp parallel geschaltet Dies reduziert den Einfluß von Rc auf die Gesamtgenauigkeit.

Aus der Sonde S sind die vier Anschlüsse Vs+, Vp-/Vs-, Vp+ und Rc herausgeführt und mit der Schaltung verbunden.

Der invertierende Eingang eines Differenzverstärkers D ist mit dem Anschluß Vs+ des Sensors S verbunden, sein nichtinvertierender Eingang ist über eine Referenzspannung Vref mit der Mittenspannung Vm verbunden. Vm = Vcc/2, wobei Vcc (üblicherweise 5V) die Versorgungsspannung der Schaltung ist.

Mit der Mittenspannung Vm ist auch der invertierende Eingang einer Pumpstromquelle P verbunden, deren nichtinvertierender Eingang mit dem Ausgang des Differenzverstärkers D verbunden ist.

Der Ausgang der Pumpstromquelle P ist mit dem Eingang Rc der Sonde S verbunden.

Der Differenzverstärker D vergleicht die Nernstspannung Vs der Sonde S (zwischen Außenluft und Meßzelle) mit der Referenzspannung Vref (450mV) und erzeugt eine der Differenz proportionale Ausgangsspannung, die von der Pumpstromquelle P in einen proportionalen Pumpstrom Ip umgewandelt wird, welcher durch die Pumpzelle (Rip und Vp) zu Vm fließt. Der Pumpstrom Ip führt zu einer Änderung der Sauerstoffkonzentration in der nicht dargestellten Meßzelle der Sonde, was wiederum eine Änderung der Nernstspannung Vs zur Folge hat.

Die Ermittlung der Sauerstoffkonzentration im Abgas (Lambda) erfolgt über eine Messung des Pumpstromes. Dazu wird der vom Pumpstrom hervorgerufene Spannungsabfall an der Parallelschaltung von Rc und Rp mittels eines nicht dargestellten Differenzverstärkers gemessen (vgl. IS in Figur 2).

Bei dieser bekannten Auswerteschaltung sind die Mittenspannung Vm = Vcc/2 und die Referenzspannung Vref mit dem Anschluß Vp-/Vs- der Lambdasonde verbunden.

Im stabilen Regelzustand beträgt die Nernstspannung Vs=450mV, und auch Vp = 450mV: es herrscht ein Gleichgewichtszustand zwischen dem Sauerstoff-Fluss durch die Diffusionsbarriere und dem Sauerstoffionen-Fluss, bedingt durch den Pumpstrom Ip.

Der maximale Bereich der Ausgangsspannung der Pumpstromquelle P reicht von ca 0.1V bis 4.9V. Die Nachteile dieser Schaltung sind bereits weiter oben dargelegt worden.

Eine Prinzipschaltung einer erfindungsgemäßen Vorrichtung zum Betrieb einer linearen Lambdasonde einer Brennkraftmaschine ist in Figur 2 dargestellt.

Figur 2 zeigt die bereits in Figur 1 beschriebene Lambdasonde S mit einer erfindungsgemäßen Schaltung. Ein Operationsverstärker und die mit seinem invertierenden Eingang verbundene Parallelschaltung der Widerstände Rc und Rp bilden eine Pumpstromquelle P. Deren nichtinvertierendem Eingang wird die Mittenspannung Vm zugeführt, und sein Ausgang ist mit dem zweiten Sondenanschluß Vp-/Vs- verbunden.

Der Ausgang der Pumpstromquelle P ist über die Referenzspannung Vref und einen Widerstand R3 mit dem nichtinvertierenden Eingang eines mit Widerständen R1 bis R4 als Differenzverstärker D beschalteten Operationsverstärkers verbunden, dessen invertierender Eingang über den Widerstand R1 mit dem ersten Sondenanschluß Vs+ verbunden ist. Der Widerstand R2 verbindet den nichtinvertierenden Eingang mit dem Ausgang und der Widerstand R4 führt vom invertierenden Eingang zur Mittenspannung Vm.

Auf den Differenzverstärker D folgt ein Regler R, ein mit Widerständen R5 bis R8 und Kondensatoren C1 und C2 als PID-Regler beschalteter Operationsverstärker, der auch als I-Regler oder PD-Regler ausgebildet sein kann, dessen nichtinvertierendem Eingang die Mittenspannung Vm zugeführt wird. Der Ausgang dieses Reglers R ist mit dem vierten Sondenanschluß Rc verbunden.

Des weiteren ist ein Differenzverstärker IS vorgesehen, dessen Eingänge mit den beiden Anschlüssen der parallelen Widerstände Rc und Rp verbunden sind.

Der Differenzverstärker D mißt die Differenz von Sondenspannung Vs und Referenzspannung Vref. Sein Ausgangssignal stellt also die Abweichung zwischen Vs und Vref dar - bezogen auf die Mittenspannung Vm (Fehlersignal der Regelschleife). Das Ausgangssignal des Differenzverstärkers D wird dem Regler R zugeleitet, welcher eine Regelspannung erzeugt, die der Pumpstromquelle P über die parallelen Widerstände Rc und Rp zugeführt wird. Die Pumpstromquelle P wandelt diese Regelspannung in einen entsprechenden Pumpstrom, der dann durch die Pumpzelle (Vp, Rip) des Sensors S fließt.

Mißt man die Spannung an der Parallelschaltung von Rc und Rp mittels des Differenzverstärkers IS, so erhält man ein sehr genaues und bereits kalibriertes Maß für den Pumpstrom Ip und damit für λ.

Da die Eingangsspannungsdifferenz eines Operationsverstärkers sehr klein ist - sie entspricht der Offsetspannung und beträgt in der Regel weniger als 10mV - liegt der dritte Anschluss Vp+ der Sonde S annähernd auf dem Potential Vm (2.5V). Der Ausgangsspannungsbereich des Operationsverstärkers ist durch die Versorgungsspannung Vcc (5V) und die Sättigungsspannungen der Endstufentransistoren (ca. 0.1V) begrenzt; er reicht bei der Pumpstromquelle P also von ca 0.1V bis 4.9V.

Als Resultat ergibt sich für die Pumpzelle der Sonde S (Anschlüsse Vp+, Vp-) ein möglicher Spannungshub von ± 2.4V (2.5V - 0.1V = +2.4V; 2.5V - 4.9V = -2.4V). Dies ist mehr als ausreichend, um bei einem geforderten Pumpstrom von ±12mA die maximal zulässige bzw. erforderliche Pumpspannung von ±2.0V zu erreichen.

Durch die Konstruktion der Pumpstromquelle P ist auch sichergestellt, daß die Spannung am invertierenden Eingang des Verstärkers IS stets bei der Mittenspannung Vm liegt. Dadurch wird erreicht, daß der zu messende Spannungsabfall an den parallelen Widerständen Rc/Rp keinen Gleichtaktanteil aufweist. Ein durch die endliche Gleichtaktunterdrückung des Verstärkers P (z.B. 60dB) entstehender Meßfehler wird somit prinzipiell vermieden. Zudem wird der Eingang des Differenzverstärkers IS stets in der Nähe der Mittenspannung Vm betrieben. Operationsverstärker besitzen in diesem Bereich die kleinsten Fehler (Offset, Gleichtakt, Verstärkung, Linearität, Leckströme, u.s.w.).

Beide Maßnahmen erlauben also die Konstruktion eines Meßverstärkers mit kleinstmöglichem Meßfehler, der den gestellten Anforderungen entspricht.

Die Vorteile der erfindungsgemäßen Schaltung sind folgende:
die Messung des Pumpstroms erfolgt nun mit Bezug auf die feste Mittenspannung Vm. Der oben beschriebene Gleichtaktfehler wird somit vermieden und die Genauigkeit der Messung dadurch wesentlich verbessert;
die Messung der Nernstspannung Vs (und die Erfassung des Sonden-Innenwiderstandes Ris, in Figur 2 als Block mit dem Bezugszeichen RIM angedeutet und nicht näher ausgeführt) ist jetzt zwar mit einem Gleichtaktsignal (Vp = 2.5V ± 2V) behaftet, jedoch sind diese Meßgrößen wesentlich fehlertoleranter (bedingt durch die enorme Steilheit der Sondenkennlinie darf Vs um bis zu 50mV schwanken. Das Meßsignal zur Bestimmung des Innenwiderstandes ist eine Wechselspannung hoher Frequenz. Die vergleichsweise langsamen Änderungen des Gleichtaktsignals spielen also kaum eine Rolle);
die für die Sonde zur Verfügung stehende Spannung wird um den Betrag des Spannungsabfalles am Referenzwiderstand Rip vergrößert.(Je nach Sonde und Anwendung kann dies bis zu 12mA*100Ω = 1.2V betragen);
bei Betrieb mit einer Versorgungsspannung Vcc = 5V ist nun eine Sondenspannung Vp von annähernd ±2.5V auch bei hohen Pumpströmen (Ip = ±12mA) erreichbar. Ein gesonderter Spannungsregler ist nicht erforderlich. Dies spart Kosten;
auch bei niedriger Batteriespannung (+6V) ist die Funktion der Sonde nicht eingeschränkt.

## Patentansprüche

1. Vorrichtung zum Betrieb einer linearen Lambdasonde (S) für eine Brennkraftmaschine,
die eine Auswerteschaltung aufweist, die mit einer linearen Lambdasonde (S) verbindbar ist, wobei die Auswerteschaltung
- einen ersten Anschluß (Vs+) zum Verbinden mit der positiven Nernstspannung der Lambdasonde (S),
- einen zweiten Anschluß(Vp-/Vs-)zum Verbinden mit der negativen Polarisationsspannung der Pumpzelle und der negativen Nernstspannung der Lambdasonde (S),
- einen dritten (Vp+) Anschluss zum Verbinden mit der positiven Polarisationsspannung der Pumpzelle der Lambdasonde (S)
und einem vierten Anschluss (Rc) zum Verbinden mit einem Kalibrierwiderstand der Lambdasonde (S) aufweist, und die Auswerteschaltung
- einen Differenzverstärker (D) aufweist, welcher die Differenz der zwischen ersten (Vs+) und zweiten (Vp-/Vs-) Anschluss gemessenen Spannung, welche die in der Lambdasonde (S) gemessenen Nernstspannung (Vs)repräsentiert und einer auf eine die Hälfte der Versorgungsspannung betragende Mittenspannung (Vm) bezogenen Referenzspannung (Vref) bildet,
- mit einer Pumpstromquelle (P), welche diese Differenz in einen Pumpstrom (Ip) wandelt,
- und mit einem Differenzverstärker (IS) zum Messen der zwischen drittem Anschluss (Vp+) und viertem Anschluss (Rc) durch den Pumpstrom an dem Kalibrierwiderstand (Rc) der Lambdasonde (S) erzeugten Spannung, die als Maß für die Sauerstoffkonzentration im Abgas der Brennkraftmaschine verwendet wird,
**dadurch gekennzeichnet,**
**daß** ein invertierender Eingang der Pumpstromquelle (P) mit dem dritten Anschluß (Vp+) verbunden ist,
**daß** ein nichtinvertierender Eingang der Pumpstromquelle (P) auf das Potential der Mittenspannung (Vm) gelegt ist,
**daß** ein Ausgang der Pumpstromquelle (P) mit dem zweiten Annschluß (Vp-/Vs-) verbunden ist,
**daß** dem Differenzverstärker (D) ein Regler (R) nachgeschaltet ist,
wobei ein invertierender Eingang des Reglers (R) mit dem Ausgang des Differenzverstärkers (D) verbunden ist,
wobei ein nichtinvertierender Eingang des Reglers (R) auf das Potential der Mittenspannung (Vm) gelegt ist,
wobei ein Ausgang des Reglers (R) mit dem vierten Anschluß (Rc) verbunden ist,
**daß** ein nichtinvertierender Eingang des Meßverstärkers (IS) mit dem vierten Anschluß (Rc) und mit dem Ausgang des Reglers (R) verbunden ist, und
**daß** ein invertierender Eingang des Meßverstärkers (IS) mit dem dritten Anschluß (Vp+) verbunden ist, wobei die am Kalibrierwiderstand (Rc) meßbare Spannung auf die Mittenspannung (Vm) bezogen ist.

2. Vorrichtung nach Anspruch 1 im Kombination mit einer linearen Lambdasonde (S).

3. Vorrichtung nach Anspruch 1 oder 2, **dadurch gekennzeichnet, daß** der Regler ein Integral-Regler (I-Regler) ist.

4. Vorrichtung nach Anspruch 1 oder 2, **dadurch gekennzeichnet, daß** der Regler ein Proportional-Differential- Regler (PD-Regler) ist.

5. Vorrichtung nach Anspruch 1 oder 2, **dadurch gekennzeichnet, daß** der Regler ein Proportional-Integral-Differential-Regler (PID-Regler) ist.

## Claims

1. Device for operating a linear lambda probe (S) for an internal combustion engine, which has an evaluation circuit which can be connected to a linear lambda probe (S), wherein the evaluation circuit has
- a first terminal (Vs+) for connecting to the positive Nernst voltage of the lambda probe (S),
- a second terminal (Vp-/Vs-) for connecting to the negative polarization voltage of the pumping cell and to the negative Nernst voltage of the lambda probe (S),
- a third terminal (Vp+) for connecting to the positive polarization voltage of the pumping cell of the lambda probe (S)
and a fourth terminal (Rc) for connecting to a standardizing resistor of the lambda probe (S), and the evaluation circuit has
- a differential amplifier (D) which forms the difference between the voltage which is measured between the first terminal (Vs+) and the second terminal (Vp-/Vs-) and represents the Nernst voltage (Vs) measured in the lambda probe (S) and a reference voltage (Vref) related to a mid voltage (Vm) which comprises half of the supply voltage,
- having a pumping current source (P) which converts this difference into a pumping current (Ip),
- and having a differential amplifier (IS) for measuring the voltage generated between the third terminal (Vp+) and fourth terminal (Rc) by the pumping current at the standardizing resistor (Rc) of the lambda probe (S), which voltage is used as a measure of the oxygen concentration in the exhaust gas of the internal combustion engine,
**characterized in that** an inverting input of the pumping current source (P) is connected to the third terminal (Vp+), **in that** a non-inverting input of the pumping current source (P) is applied to the potential of the mid voltage (Vm), **in that** an output of the pumping current source (P) is connected to the second terminal (Vp-/Vs-), **in that** a controller (R) is connected downstream of the differential amplifier (D),
wherein an inverting input of the controller (R) is connected to the output of the differential amplifier (D),
wherein a non-inverting input of the controller (R) is applied to the potential of the mid voltage (Vm),
wherein an output of the controller (R) is connected to the fourth terminal (Rc),
**in that** a non-inverting input of the measuring amplifier (IS) is connected to the fourth terminal (Rc) and to the output of the controller (R), and
**in that** an inverting input of the measuring amplifier (IS) is connected to the third terminal (Vp+), wherein the voltage which can be measured at the standardizing resistor (Rc) is referred to the mid voltage (Vm).

2. Device according to Claim 1 in combination with a linear lambda probe (S).

3. Device according to Claim 1 or 2, **characterized in that** the controller is an integral-action controller (I controller).

4. Device according to Claim 1 or 2, **characterized in that** the controller is a proportional-plus-differential controller (PD controller).

5. Device according to Claim 1 or 2, **characterized in that** the controller is a proportional-plus-integral-plus-differential controller (PID controller).

## Revendications

1. Dispositif pour faire fonctionner une sonde lambda linéaire (S) pour un moteur,
qui présente un circuit d'analyse qui peut être relié à une sonde lambda linéaire (S), le circuit d'analyse présentant
- une première connexion (Vs+) pour le raccordement à la tension de Nernst positive de la sonde Lambda linéaire (S),
- une deuxième connexion (Vp-/Vs-) pour le raccordement à la tension de polarisation négative de la cellule de pompe, et avec la tension de Nernst négative de la sonde lambda linéaire (S)
- un troisième connexion (Vp+) pour le raccordement à la tension de polarisation positive de la cellule de pompe de la sonde lambda (S)
et une quatrième connexion (Rc) pour le raccordement à une résistance d'étalonnage de la sonde lambda (S),
et le circuit d'analyse comprenant
- un amplificateur différentiel (D) qui forme la différence entre la tension mesurée entre la première connexion (Vs+) et le deuxième connexion (Vp-/Vs-), qui représente la tension de Nernst (Vs) mesurée dans la sonde lambda (S) et une tension de référence (Vref) rapportée à une tension moyenne (Vm) égale à la moitié de la tension d'alimentation,
- une source de courant de pompe (P) qui transforme cette différence en un courant de pompe (Ip),
- et un amplificateur différentiel (IS) servant à mesurer la tension produite entre le troisième connexion (Vp+) et la quatrième connexion (Rc) produite par le courant de pompe aux bornes de la résistance d'étalonnage (Rc) de la sonde lambda (S), qui est utilisée comme mesure pour la concentration d'oxygène dans les gaz d'échappement du moteur à combustion interne,
**caractérisé en ce que** :
une entrée inverseuse de la source de courant de pompe (P) est reliée à la troisième connexion (Vp+),
une entrée non inverseuse de la source de courant de pompe (P) est mise au potentiel de la tension moyenne (Vm),
une sortie de la source de courant de pompe (P) est reliée à la troisième connexion (Vp-Vs-),
un régulateur (R) est connecté en aval de l'amplificateur différentiel (D),
une entrée inverseuse du régulateur (R) étant reliée à la sortie de l'amplificateur différentiel (D),
une entrée non inverseuse du régulateur (R) étant mise au potentiel de la tension moyenne (Vm),
une sortie du régulateur (R) étant reliée à la quatrième connexion (Rc),
une entrée non inverseuse de l'amplificateur de mesure (IS) est reliée à la quatrième connexion (Rc) et à la sortie du régulateur (R) et
une entrée inverseuse de l'amplificateur de mesure (IS) est reliée à la troisième connexion (Vp+), la tension qui peut être mesurée aux bornes de la résistance d'étalonnage (Rc) étant rapportée à la tension moyenne (Vm).

2. Dispositif selon la revendication 1, en combinaison avec une sonde lambda linéaire (S).

3. Dispositif selon la revendication 1 ou 2, **caractérisé en ce que** le régulateur est un régulateur intégral (régulateur I) .

4. Dispositif selon la revendication 1 ou 2, **caractérisé en ce que** le régulateur est un régulateur proportionnel-différentiel (régulateur PD).

5. Dispositif selon la revendication 1 ou 2, **caractérisé en ce que** le régulateur est un régulateur proportionnel-intégral-différentiel PID).
